# EUROPEAN PATENT SPECIFICATION

(11) **EP 0 951 689 B1**
(45) Date of publication and mention of the grant of the patent: **28.08.2002**
(21) Application number: 98907934.8
(22) Date of filing: 09.01.1998
(51) Int. Cl.: G06K 11/18, H04M 1/00

(54) **DATA INPUT DEVICE**
DATENEINGABEGERÄT
DISPOSITIF SERVANT A ENTRER DES DONNEES

(30) Priority: 10.01.1997 DE 19700647
(43) Date of publication of application: 27.10.1999
(73) Proprietor: TELEFONAKTIEBOLAGET L M ERICSSON (publ), 126 25 Stockholm (SE)
(72) Inventor: KODIM, Walter, D-90489 Nürnberg (DE)
(74) Representative: HOFFMANN - EITLE
(86) International application number: EP9800098
(87) International publication number: WO98030971

(56) References cited:
- EP-A- 0 520 089
- EP-A- 0 602 840
- EP-A- 0 789 321
- WO-A-94/22071
- DE-A- 3 407 131
- DE-A- 3 912 354
- GB-A- 2 272 763
- GB-A- 2 289 555
- "MOUSE WITH GEODESIC BALL" RESEARCH DISCLOSURE, no. 303, July 1989, page 519 XP000045833
- "KEYBOARD-INTEGRATED THUMB-BALL WITH SWITCH" IBM TECHNICAL DISCLOSURE BULLETIN, vol. 36, no. 9B, 1 September 1993, page 189 XP000397116

## Description

### [Field of Invention]

The present invention relates to a data input device, and especially to a data input device of the rotating ball type, such as a track-ball.

### [Technical Background and Prior Art]

Various types of devices for manually entering data into electronic devices are known, e.g. keyboards or push button arrays. With the advent of electronic devices using display screens to inform the user and help him interact with the device, it has become important to provide data input devices in which a high-lighted portion of the screen (e.g. cursor or pointer) can be manipulated, i.e. moved to a desired location on the screen. A well known data input device of this type is a mouse.

A mouse generally contains a ball that is rotatably supported in a housing, where the moving of the housing by a user results in a rotation of the ball, because the ball is held in frictional contact with a surface underlying the housing. The ball's rotation is detected by sensor elements that measure the rotation in two different directions. The movement of the ball in these two directions is then translated into a movement of the cursor or pointer on the two-dimensional display screen.

An input device that operates according to basically the same principal is the so called track-ball. A track-ball also consists of a rotatable ball in a housing, where the rotation of the ball is detected, but the difference is that in the case of the track-ball, not the housing is moved, but the ball itself is directly manipulated by the user. This has the advantage that no space is required for moving the mouse about. Consequently, track-balls are preferred in devices where available space has to be economically used, i.e. especially in portable devices like laptop computers.

Various techniques for measuring the rotational movement of the ball are known. One is to provide rollers that contact the ball, where the rollers are oriented to pick up different rotational directions of the ball. The rotation of the rollers is then evaluated, e.g. through optical measurement of scanning disks attached to the shafts on which the rollers are held.

It is also possible to provide an optical method of directly measuring the ball rotation, as shown in WO-94/22071. According to this document, the ball is covered with a plurality of concave reflectors and thereby resembles a golf ball. Light sending and receiving means are provided around the ball, where the varying reflections from the ball are used to detect the ball's rotation. The ball is covered with a transparent layer to thereby be able to roll smoothly. A similar scheme is shown in DE-30 45 133 A1.

Furthermore, a system for the precise measurement of the rotated distance is known from DE-39 12 354 A1, wherein at least two permanent magnets are provided in the rotatable ball, where said magnets cross each other at a non-zero angle. At least two magnetic sensors, such as Hall sensors, are provided around the ball, to thereby measure the ball's rotation on the basis of the change in magnetic field.

DE-A-3 407 131 proposes providing an optically or magnetically readable pattern on a rolling ball.

The above mentioned systems are characterized in that the cursor or pointer can be moved to any desired point on a screen to thereby choose a command associated with that point, where the user then has to actuate a button or key to thereby let the device execute said command. This apparent advantage turns into a disadvantage when the visual conditions deteriorate, i.e. when a user does not have clear view of the screen. This can e.g. be the case when using a portable electronic device outside in direct sun light. This is also the case if the user is blind. Whereas keyboards and push button arrays can often be used by the blind, e.g. simply by virtue of the fact that a desired command can be executed by pushing a key in a known position a predetermined number of times, rotating ball type input devices are generally not suited for use by a blind person.

DE-41 40 780 C2 discloses an input device that provides tactile feedback to the user. The described input device is comparable to a mouse, only that a part of the area on which the user places his hand is covered with an array of buttons whose height can be adjusted in response to the pointer position on a screen. Thereby, the user can "feel" the position of the screen pointer by way of the position of an elevated button in the array. This system is complicated, because it requires buttons that can be elevated and requires feedback from the screen control system, and moreover, it takes up a lot of space.

DE-38 28 416 C2 discloses a device for manually controlling an electronic device. This document gives the example of a tape player, where a track-ball is selectively used to adjust the tape position and to move a cursor on a screen. The track-ball comprises a ball and rollers, where the shafts of the rollers are connected to brakes. The brakes are actuated in response to information fed back from the screen or from the tape adjustment means, to thereby let the user feel a resistance in the ball at given positions. For example, both brakes can be actuated when the cursor reaches the edge of the screen, so that the user "feels" the edge. As in the preceding case, this device is also fairly complicated and the brakes require sufficient space.

JP-62-75830 discloses a mouse containing a brake for the rotating ball.

Due to their complexity and their use of space, these input devices are not suited for miniaturizing, so that they can not easily be applied to portable devices, especially not to those of small dimensions, such as cellular phones. The field of small portable devices is however very promising for the application of track-ball input devices, because track-balls can be arranged to require less space than four directional keys. This is due to the fact that keys have to have a sufficient area and sufficient distance from one another, otherwise it becomes difficult for the user to actuate an individual key without the danger of pressing several keys at once.

From the document "Mouse with Geodesic Ball", Research Disclosure, No. 303, July 1989, page 519 XP000045833, a mouse is known that uses a geodesic ball having a given number of flat sides, such that a movement of the ball provides discrete readings. This enables a tactile feedback to the user. The document "Keyboard-Integrated Thumb-Ball with Switch", IBM Technical Disclosure Bulletin, vol. 36, No. 9B, 1. September, 1993, page 189 XP000397116 discloses a so-called thumb-ball, i.e. a thumb-sized track ball which can be mounted on a small keyboard, wand, or remote control box and has a built in make- and break switch for switches so that the depression of the ball as well as its rotational movement can be detected. This document mentions force feedback to the user of the thumb-ball, such that when the ball is turned, the user feels resistance to movement. From EP-0 520 089 A a mouse system is known where the rolling force of the ball is made adjustable. Additionally, this document describes that the mouse ball may contain a core made of iron or any other magnetic sensitive material, and a magnet displaced in the housing outside of the ball, such that this magnet will attractthe iron core of the ball. The internal core can have small bumps or craters, such that a varying ball force will be created and the operator will feel the ball moving in small steps. Also, this document mentions that the control magnet can be an electromagnet.

GB-2 272 763 A describes a device and method for determining movement, that comprises a coherent source of radiation, e.g. a laser, which is directed towards a moving surface, and a plurality of radiation sensors is arranged to detect an intensity pattern, e.g. laser speckle patterns, due to the interference in the radiation reflected back from the moving surface. It is mentioned that the device is particularly useful in a mouse or track-ball. An arrangement is shown where the ball is covered with small "dimples" that lead to a specific reflection pattern.

### [Disclosure of invention]

The present invention has the object of providing a data input device of the rotating ball type, in which a user does not have to exclusively rely on watching a pointer on a screen when rotating said ball, wherein said input device is simple in construction and may easily be miniaturized.

This object is solved by data input devices according to claim 1, in which a simplicity of construction is achieved by having elements perform a dual function. Claim 1 is delimited against EP-A-0 520 089.

Generally, the embodiments of the present invent on comprise a first and second interaction means, when these means excert a force upon one another such that the force necessary for rotating the ball depends on the positional relation between the first and second interaction means.

According to an embodiment, the first interaction means are permanent magnets arranged inside the ball, while the second interaction means are magnets provided around the ball. These latter magnets are preferably electromagnets whose field strength can be controlled. Further advantageous embodiments are described in the subclaims.

Due to the interaction between the two interaction means, a user can feel and preferably hear the movement of the ball between discrete states, where these discrete states are determined by the arrangement of the first and second interaction means. As the forces that the user feels while manipulating the input device stem from the interaction of elements that are provided both on the ball are around the ball, a simple and compact structure can be achieved.

The present invention achieves a data input means containing a rotatable ball, there tile ball is able to assume a predetermined and finite number of states, and the user can feel (and preferably hear) the ball assuming these states.

### [Description of Figures]

The features and advantages of the present invention will become readily apparent from the following detailed description of embodiments of the invention. Reference is made to the enclosed figures, in which
- Fig. 1: is a schematical view of system not belonging to the present invention, where the interaction means operate on the basis of mechanical interaction;
- Fig. 2: is a schematical view of an input device, in which the interaction means function on the basis of magnetic interaction;
- Fig. 3: is perspective view of a structure for holding magnets contained in the ball shown in Fig. 2; and
- Fig. 4: is a schematical view of a system not belonging to the present invention that uses an optical rotation detector.

### [Detailed Description of Embodiments]

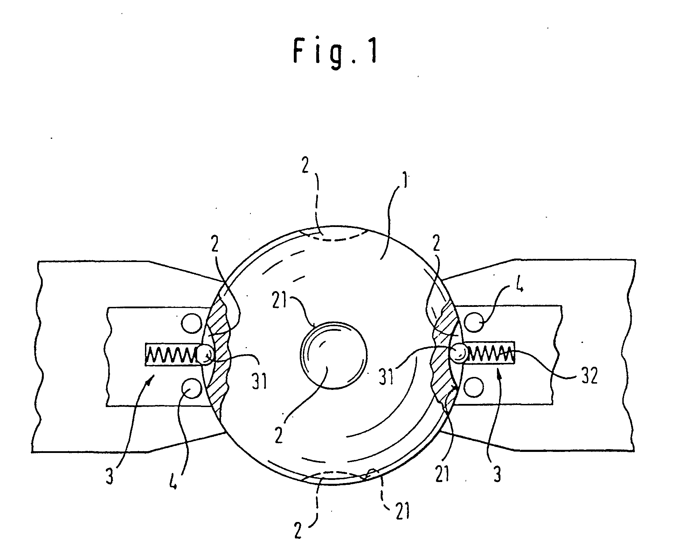

Fig. 1 shots a data input device. Numeral 1 refers to a rotatable ball, numeral 2 refers to cavities in the surface of ball 1, numeral 3 des gnates mechanical interaction means (engaging means) that interact with the cavities 2 on the surface of ball 1, and numeral 4 relates to rotation detection means for detecting the amount of rotation of ball 1. The mechanical interaction means 3 preferably consists of a ball 31 attached to a spring 32.

The rotation detection means 4 are connected to a rotation evaluation circuit 1 (not shown), wherein the amount of rotation of ball 1 detected by the detectors 4 is translated into an electrical signal, which in turn is provided as an input to the electronic device on which the presently described embodiment is mounted. The arrangement shown in Fig. 1 is contained in a housing (not shown), to thereby constitute the data input means of the rotating bell type, such as a track ball or a mouse.

When the ball 1 shown in Fig. 1 is rotated from the position shown in the figure, i.e. the position where the small balls 31 pushed by the springs 32 are held in the cavities 2, then a user will feel a certain amount of mechanical resistance. On the other hand, if the balls 31 have not fallen into place in a given cavity 2, then the force necessary for rotating the ball 1 will be smaller than in the case of the balls 31 being in one of the cavities 2. Also, if one of the balls 31 reaches the edge 21 of a cavity 2, then the ball 31 will snap into place in the cavity 2. This snapping engagement can easily be felt by the user manipulating the ball 1, and preferably the snapping into place of a ball 31 will lead to an audible click. In this way, the user can feel and hear the movement of rotating ball 1.

The number of states in which the mechanical interaction means 3 and cavities 2 are in engagement is finite and is determined by the number of cavities 2 on the surface of the ball 1, as well as by the number of interaction means 3 arranged along the periphery 1. The number of states is also determined by the relative geometrical arrangement of the cavities and the engagement means, as well as by symmetry in which the cavities and engaging means are arranged. Preferably, this finite number of states in which the ball is held by the interaction means 3 being engaged in the cavities 2, corresponds to a given number of states on a display screen of the electronic device in which the data input means of the presently described example is being used. More specifically, the screen may e.g. show a menu, where the cursor can be moved to n positions on the screen, n being an integer. In this case, it is prererable that the input device shown in Fig. 1 is also capable of assuming n states. In this case, the user can directly "feel" (and hear) when the rotating ball 1 moves the cursor from one position to another. Even though this correspondence between the number of states that a cursor (or pointer element) on a screen can assume and the number of states that the ball 1 can assume is preferable, the present example is by no means restricted to such a correspondence. Much rather, it is equally well possible that the number of states that the ball 1 can assume is larger or smaller than the number of states that the cursor can assume on the screen.

Moreover, the ball 1 shown in Fig. 1 has a regular arrangement of cavities 2 on its surface, i.e. the cavities 2 are arranged in a symmetrical fashion. Such an arrangement is advantageous, because the individual states into which ball 1 can snap appear at equal intervals of rotation of the ball 1, but the present example is by no means restricted to such a symmetrical arrangement. Quite to the contrary, if it is desired to reflect a specific non-symmetrical arrangement of states of a cursor on a screen, it is very well possible to also provide a non-symmetrical arrangement of cavities on the ball surface, so that the movement of rotating ball 1 closely corresponds to the movement of the cursor on the screen. Also, Fig. 1 shows two mechanical engaging means 3 that are symmetrically arranged with respect to rotating ball 1. However, it is equally well possible to only have one mechanical engaging means 3 or to have more than two. Furthermore, a plurality of such engaging means does not necessarily have to be arranged in any symmetrical fashion.

Due to the symmetrical arrangement of the cavities 2 on ball 1, and the symmetrical arrangement of the mechanical engaging means 3 with respect to the ball, the system shown in Fig. 1 is capable of assuming 6 states, where it should be noted that one of the cavities of ball 1 is not shown in the figure, because it is located on the side of ball 1 that opposes the side facing upward out of the figure plane.

The system of Fig. 1 does not contain conventional bearing means, because the mechanical engagement means 3 are arranged in such a way that they also fulfill the purpose of holding ball 1 in a rotatable way. In other words, the mechanical engagement means 3 on the one hand determine the finite number of states that the system can assume by interacting with the cavities 2, and on the other hand also function as bearings for ball 1, so that they fulfill a dual function.

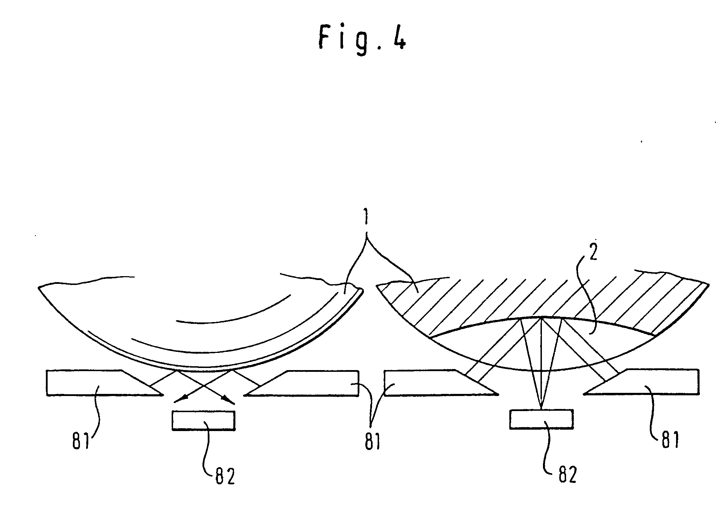

As an alternative, the rotation detection is accomplished by an optical detection arrangement. As shown in Fig. 4, light guiding means 81 (or light generating means) are provided that direct light rays towards the surface of ball 1. The cavities are formed in such a way that the light from the guiding means 81 is focussed onto a photodetector 82 if the cavity 2 is located opposite of the detector 82, as shown on the right hand part of Fig. 4. On the other hand, if ball 1 is in some other position, the light from the guiding means 81 will not reach the photodetector 82, as shown on the left hand side of Fig. 4. Thus, the signal from photodetector 82 can be used to determine and measure the rotation of ball 1. The light guiding means 81 can consist of known plastic materials having the desired properties, where the light source (not shown) for feeding light to the guiding means 81 can e.g. be a light source associated with a conventional key-board illumination. It is, however, equally well possible that the elements 81 shown in Fig. 4 are light sources that generate light at the shown location, e.g. LEDs.

Such an optical rotation measuring means can be used to exploit the cavities 2 in a dual fashion. The cavities 2 on the one hand interact with the interaction means 3 (e.g. springs) to thereby configure the discrete states that the ball 1 can assume and which the user can feel when moving the ball 1, and on the other hand the cavities 2 can be employed for measuring the rotation of the ball 1. An especially advantageous structure results, if the above mentioned dual function of the interaction means 3 (i.e. interaction with the cavities and at the same time holding the ball 1) is combined with this dual function of the cavities 2. However, it should be noted that the feature of an optical rotation measuring means can be combined with any of the above mentioned examples.

In addition to the audible sounds that result from the mechanical interaction between the cavities 2 and the interaction means 3, the output of photodetector 82 can be used to enable an audiosignal, e.g. a beep, every time that a cavity passes the photosensor 82. This enhances the system's performance.

The above described examples use cavities 2 on ball 1 as a first interaction means and flexible engagement means 3 as a second interaction means. According to another example, it is equally well possible that ball 1 comprises protrusions in place of the cavities, where these protrusions interact with compressible spring elements provided around the periphery or the ball. The system operates according to the same principle as described above, namely that the ball will snap into a discrete number of states when being rotated, said number of states being determined by the geometrical arrangement of the protrusions on the surface of the ball and the geometrical arrangement of the flexible elements provided around the periphery of the ball.

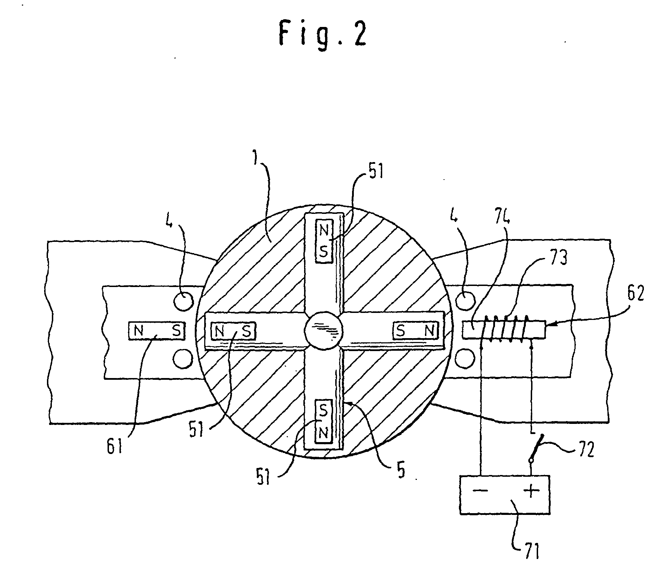

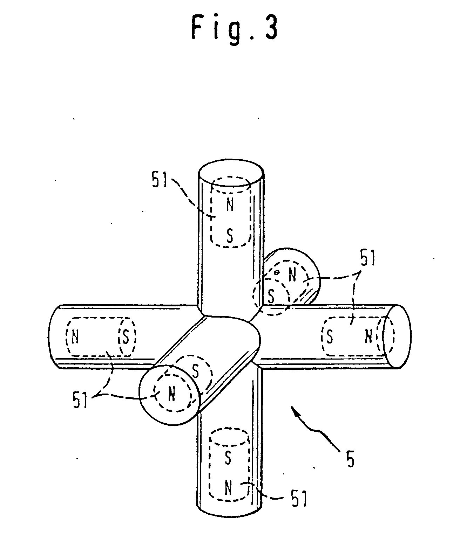

Fig. 2 shows another data input device, which uses a different principle of interaction between the first and second interaction means. As in Fig. 1, reference numeral 1 designates a rotatable ball and reference numeral 4 designates rotation detection means for detecting the amount of rotation of ball 1. Numeral 5 refers to a geometrical arrangement of permanent magnets 51, which are provided inside of ball 1. Fig. 3 shows a perspective view of a possible structure 5 for arranging the magnets 51.

Reference numeral 61 designates a permanent magnet provided facing the surface of ball 1. Numeral 62 designates an electro-magnet whose field strength can be adjusted by the application of a current from a source 71. Electro-magnet 62 e.g. consists of a coil 73 wound around a core 74. Fig. 2 furthermore shows a switch 72, which is meant to symbolize that the current from source 71 is controllable in any desired fashion, so that the magnetic field strength produced by electromagnet 62 can be adjusted to any desired value.

Regarding the elements 51 and 61 shown in Fig. 2, it should be remarked that it is not necessary that both elements are permanent magnets. It is sufficient if one element is a permanent magnet and the other only shows ferromagnetic properties, e.g. consists of magnetically soft iron. It is only important that the respective elements interact magnetically. However, it is preferable that both elements 51 and 61 are permanent magnets, as described above.

The rotation detectors 4 can be of the mechanical type, i.e. a roller that frictionally engages with the ball, so that the ball rotation is translated into a rotation of the shaft on which the roller sits, or they can be of the magnetic type, e.g. Hall elements or small inductance sensitive elements (such as coils) that measure the change in magnetic flux density when the magnets 51 contained in the ball 1 are rotated by the sensors. Furthermore, they can also be of the optical type, as shown in connection with Fig. 4.

The arrangement of Fig. 2 operates according to the same principle as that of Fig. 1, namely that the force necessary for rotating the ball 1 depends on the positional relationship between the permanent magnets 51 in the ball and the magnets 61 or 62 provided around the ball. More specifically, if the north and south poles of the magnets are arranged as shown in Fig. 2, namely that the north poles of the magnets 51 in the ball 1 are directed towards the ball's surface or as the south poles of the magnets 61 provided around the ball face said surface, then the alignment shown in Fig. 2 leads to a mechanical resistance when wanting to rotate the ball into a different position. On the other hand, if the magnets 61, 62 and 51 are not aligned, then a force will act on the ball, such that it will be rotated into alignment.

It should be noted that the orientation of the magnets 51 in the ball and the orientation of the magnets 61 outside of the ball can be arbitrary. If e.g. the permanent magnet 61 shown in Fig. 2 were inverted, i.e. its north pole would face towards the ball's surface, then the interaction between magnet 61 and a magnet 51 would cause the magnet 51 to be repelled. This would lead to the stable states of the ball (i.e. the states into which the ball snaps) being those where two magnets 51 keep an equal distance from the magnet 61.

The arrangement of magnets 51 in Fig. 2 corresponds to the arrangement of cavities 2 shown in Fig. 1. Moreover, the arrangement of outside magnets 61, 62 in Fig. 2 corresponds to the arrangement of flexible engagement means 3 in Fig. 1. As already explained in connection with Fig. 1, one is not restricted to any specific geometrical arrangement of the interaction means, and therefore the magnets 51, 61 and 62 can in principle be arranged in any suitable way. Also any number of such magnets can be provided.

The forces acting between the magnets can be felt by the user manipulating the rotating ball 1, so that the user can feel the ball assuming a discrete number of states. This leads to a situation that is very similar to the one described above in connection with Fig. 1, so that all of the corresponding aspects discussed in connection with Fig. 1 also apply to the example shown in Fig. 2.

The arrangement shown in Fig. 2 shows the use of a permanent magnet 61 and an electromagnet 62 together in one arrangement. This is one possibility. It is also possible to exclusively use permanent magnets or to exclusively use electromagnets. The electromagnets have the advantage that their magnetic field strength can be adjusted. Therefore, by providing an appropriate control means (schematically shown as a switch 72 in Fig. 2), the field strength can be adjusted in any desired way. For example, the field strength can be adjusted in response to features on the screen of the electronic device in which the input means of Fig. 2 is mounted. Also, it is possible to adjust the strength of snapping, so that a user can select a desired strength.

According to the present invention, electromagnets 62 are used. By connecting a voltage detection means (not shown) to coil 73, it is possible to measure the rotation of ball 1 because the passing permanent magnets 51 cause a change in magnetic flux density that in turn leads to a voltage being induced in coil 73. Therefore, according to the present invention, the rotation detection devices 4 shown in Fig. 2 are eliminated and the rotation of ball 1 is detected in accordance with the voltage induced in the coils 73 of electromagnets 62.

In a preferred embodiment, the voltage induction in the coils 73 of electromagnets 73 can also be used to generate an audible signal, e.g. a beep or click, so that the user can also hear the rotation of the ball 1, similarly to the mechanical clicking generated by the arrangement shown in Fig. 1. For this purpose, the electronic device on which the data input device of Fig. 2 is mounted needs to have a loudspeaker and a loudspeaker control means, said loudspeaker control means actuating said loudspeaker to give off the specizic audible signal whenever the voltage or voltage change measured at a coil 73 fulfills a specific condition.

In a further preferred embodiment, the magnets 51 in structure 5 consist of a magnetizable material, such as magnetically hard steel, so that the magnets 51 act as permanent magnets once they have been magnetized, but where this magnetization can be changed by applying sufficiently strong external magnetic fields. An apparatus for magnetizing and/or demagnetizing these magnets 51 can consist of a DC magnet for magnetization and an AC magnetic source for demagnetization. This way, it is possible to achieve a "programmable" ball 1, because the magnetic properties of the individual magnets 51 in ball 1 can be adjusted from the outside. It is e.g. possible to magnetically configure ball 1 in a desired way during production, where the applying of one specific configuration can easily be changed by simply changing the magnetization strength and pattern for the magnets 51 in ball 1. Moreover, the configuration can be changed at a later date, e.g. by a magnetizing/demagnetzing means contained in the device in which the input means of the present invention is contained. A user can thereby individually adjust the magnetic configuration of the ball 1 in accordance with his preferances or with the requirements of the device and software that he is using.

In the following, an example of an application of the present invention shall be given. Cellular telephones nowadays generally comprise small data screens that are used to display information to the user. Typically such a screen will display a menu, e.g. a list of telephone numbers that are stored and can be automatically dialed by simply pushing a specific button. In this case, the user must move a cursor to a given item in the list, where this item corresponds to the desired telephone number. Assuming that the user is not capable of seeing the screen, e.g. due to direct sunlight, but that he nonetheless knows the position of the item on the screen from practice, the data input device of the present invention allows the user to move the cursor to the desired position, although the user cannot see the screen on which the cursor is being moved. For example, if the user knows that the desired item is three steps down and one step to the left, then he can roll the ball 1 of the present invention downwards until he feels that three states have been passed, whereupon he moves the ball one step to the right. He can equally well listen to and count the number of clicks or beeps generated by the movement of the ball 1. At the same time, the data input means of the present invention saves space in comparison with a set of four push buttons for manipulating a cursor on a screen.

Naturally, the present invention is in no way restricted to such an application, and can also advantageously be used in e.g. a laptop computer, a palmtop device such as an electronic organizer, or in similar devices.

Therefore, the present invention achieves a data input means containing a rotatable ball, where the ball is able to assume a predetermined, finite number of states, and the user can feel and preferably hear the ball assuming these states.

## Claims

1. A data input device comprising a rotatable ball (1) and rotation detection means for detecting the rotation of said ball (1), wherein at least one first magnetic interaction means (51) is provided at a predetermined location on or in said ball (1), and at least one second magnetic interaction means (61;62) is provided at a predetermined location around said ball (1), said first and second magnetic interaction means (51;61;62) exerting a force upon one another such that the force necessary for rotating said ball (1) depends on the positional relation between said first and second magnetic interaction means (51;61;62), said second magnetic interaction means being an electromagnet (62), **characterized in that**
second magnetic interaction means has a coil (73), which at the same time is a part of said rotation detection means.

2. The data input device of claim 1, **characterized in that** said first magnetic interaction means (51) is a permanent magnet.

3. The data input device of claim 2, **characterized in that** said first magnetic interaction means (51) consists of a magnetically hard material.

4. The data input device according to one of claims 1 to 3, **characterized in that** said electromagnet (62) is connected to a current control means (71,72) for controlling the magnetic field strength generated by said electromagnet (62).

5. The data input device according to one of claims 1 to 4, **characterized in that** said coil (73) is connected to a voltage detection means that detects a voltage induced by a movement of the first magnetic interaction means (51).

6. The data input device of claim 5, **characterized in that** said voltage detection means is connected to a control means, wherein said control means gives off a command for generating an audible sound if the voltage measured by said voltage detection means fulfills a predetermined condition.

7. The data input device of one of claims 1 to 6, **characterized in that** a plurality of first interaction means (51) is arranged symmetrically with respect to the center of said ball (1) on or in said ball (1).

8. The data input device of one of claims 1 to 7, **characterized in that** a plurality of second interaction means (61;62) is arranged symmetrically with respect to the center of said ball (1).

9. The data input device of one of claims 1 to 8, **characterized in that** said input device is contained in an apparatus that comprises a screen, where a control means is provided that translates the movement of said ball (1) measured by said rotation detection means (73) into a movement of a mark on said screen.

10. The data input device of claim 9, **characterized in that** said first and second interaction means (51;61;62) are arranged in such a way that the number of states that said ball (1) can assume due to the interaction of said first and second interaction means (51;61;62) corresponds to the number of states that said marker can assume on said screen.

11. The data input device of one of claims 1 to 10, **characterized in that** said data input means is a part of a track-ball.

12. The data input device of one of claims 1 to 11, **characterized in that** said data input means is a part of a portable telephone.

## Patentansprüche

1. Dateneingabegerät mit einer drehbaren Kugel (1) und einer Drehdetektorvorrichtung zur Feststellung der Drehung der Kugel (1), wobei zumindest eine erste Magnetwechselwirkungsvorrichtung (51) an einem vorbestimmten Ort auf oder in der Kugel (1) vorgesehen ist, und zumindest eine zweite Magnetwechselwirkungsvorrichtung (61; 62) an einem vorbestimmten Ort um die Kugel (1) herum vorgesehen ist, die erste und zweite Magnetwechselwirkungsvorrichtung (51; 61; 62) aufeinander eine Kraft ausüben, so dass die zum Drehen der Kugel (1) erforderliche Kraft von der Positionsbeziehung zwischen der ersten und der zweiten Magnetwechselwirkungsvorrichtung (51; 61; 62) abhängt, und die zweite Magnetwechselwirkungsvorrichtung ein Elektromagnet (62) ist, **dadurch gekennzeichnet, dass** die zweite Magnetwechselwirkungsvorrichtung eine Spule (73) aufweist, die gleichzeitig ein Teil der Drehdetektorvorrichtung ist.

2. Dateneingabegerät nach Anspruch 1, **dadurch gekennzeichnet, dass** die erste Magnetwechselwirkungsvorrichtung (51) ein Permanentmagnet ist.

3. Dateneingabegerät nach Anspruch 2, **dadurch gekennzeichnet, dass** die erste Magnetwechselwirkungsvorrichtung (51) aus einem magnetisch harten Material besteht.

4. Dateneingabegerät nach einem der Ansprüche 1 bis 3, **dadurch gekennzeichnet, dass** der Elektromagnet (62) an eine Stromsteuervorrichtung (71, 72) zum Steuern der Magnetfeldstärke angeschlossen ist, die von dem Elektromagneten (62) erzeugt wird.

5. Dateneingabegerät nach einem der Ansprüche 1 bis 4, **dadurch gekennzeichnet, dass** die Spule (73) an eine Spannungsdetektorvorrichtung angeschlossen ist, welche eine Spannung feststellt, die durch eine Bewegung der ersten Magnetwechselwirkungsvorrichtung (51) induziert wird.

6. Dateneingabegerät nach Anspruch 5, **dadurch gekennzeichnet, dass** die Spannungsdetektorvorrichtung an eine Steuervorrichtung angeschlossen ist, wobei die Steuervorrichtung einen Befehl zur Erzeugung eines hörbaren Tons angibt, wenn die von der Spannungsdetektorvorrichtung gemessene Spannung eine vorbestimmte Bedingung erfüllt.

7. Dateneingabegerät nach einem der Ansprüche 1 bis 6, **dadurch gekennzeichnet, dass** mehrere erste Wechselwirkungsvorrichtungen (51) symmetrisch in Bezug auf das Zentrum der Kugel (1) auf oder in der Kugel (1) angeordnet sind.

8. Dateneingabegerät nach einem der Ansprüche 1 bis 7, **dadurch gekennzeichnet, dass** mehrere zweite Wechselwirkungsvorrichtungen (61; 62) symmetrisch in Bezug auf das Zentrum der Kugel (1) angeordnet sind.

9. Dateneingabegerät nach einem der Ansprüche 1 bis 8, **dadurch gekennzeichnet, dass** das Eingabegerät in einer Einrichtung enthalten ist, die einen Bildschirm aufweist, wobei eine Steuervorrichtung vorgesehen ist, welche die Bewegung der Kugel (1), die von der Drehdetektorvorrichtung (73) gemessen wird, in eine Bewegung einer Markierung auf dem Bildschirm umsetzt.

10. Dateneingabegerät nach Anspruch 9, **dadurch gekennzeichnet, dass** die erste und die zweite Wechselwirkungsvorrichtung (51; 61; 62) so angeordnet sind, dass die Anzahl an Zuständen, welche die Kugel (1) infolge der Wechselwirkung der ersten und zweite Wechselwirkungsvorrichtung (51; 61; 62) annehmen kann, der Anzahl an Zuständen entspricht, welche die Markierung auf dem Bildschirm annehmen kann.

11. Dateneingabegerät nach einem der Ansprüche 1 bis 10, **dadurch gekennzeichnet, dass** die Dateneingabevorrichtung ein Teil einer Rollkugel ist.

12. Dateneingabegerät nach einem der Ansprüche 1 bis 11, **dadurch gekennzeichnet, dass** die Dateneingabevorrichtung ein Teil eines Mobiltelefons ist.

## Revendications

1. Un dispositif d'entrée de données comprenant une boule rotative (1) et un moyen de détection de rotation pour détecter la rotation de ladite boule (1), dans lequel au moins un premier moyen d'interaction magnétique (51) est disposé à un emplacement prédéterminé sur ou dans ladite boule (1), et au moins un deuxième moyen d'interaction magnétique (61 ; 62) est disposé à un emplacement prédéterminé autour de ladite boule (1), lesdits premier et deuxième moyens d'interaction magnétiques (51 ; 61 ; 62) exerçant une force l'un sur l'autre de sorte que la force nécessaire pour faire tourner ladite boule (1) dépend de la relation de position entre lesdits premier et deuxième moyens d'interaction magnétiques (51 ; 61 ; 62), ledit deuxième moyen d'interaction magnétique étant un électroaimant (62), **caractérisé en ce que** ledit deuxième moyen d'interaction magnétique possède une bobine (73), qui est en même temps une partie dudit moyen de détection de rotation.

2. Le dispositif d'entrée de données selon la revendication 1, **caractérisé en ce que** ledit premier moyen d'interaction magnétique (51) est un aimant permanent.

3. Le dispositif d'entrée de données selon la revendication 2, **caractérisé en ce que** ledit premier moyen d'interaction magnétique (51) consiste en une matière magnétiquement dure.

4. Le dispositif d'entrée de données selon l'une des revendications 1 à 3, **caractérisé en ce que** ledit électroaimant (62) est relié à un moyen de commande de courant (71, 72) pour commander l'intensité de champ magnétique produit par ledit électroaimant (62).

5. Le dispositif d'entrée de données selon l'une des revendications 1 à 4, **caractérisé en ce que** ladite bobine (73) est reliée à un moyen de détection de tension qui détecte une tension induite par un mouvement du premier moyen d'interaction magnétique (51).

6. Le dispositif d'entrée de données selon la revendication 5, **caractérisé en ce que** ledit moyen de détection de tension est relié à un moyen de commande, dans lequel ledit moyen de commande émet une commande pour générer un son audible si la tension mesurée par ledit moyen de détection de tension satisfait à une condition prédéterminée.

7. Le dispositif d'entrée de données selon l'une des revendications 1 à 6, **caractérisé en ce qu'**une pluralité de premiers moyens d'interaction (51) est agencée de façon symétrique par rapport au centre de ladite boule (1) sur ou dans ladite boule (1).

8. Le dispositif d'entrée de données selon l'une des revendications 1 à 7, **caractérisé en ce qu'**une pluralité de deuxièmes moyens d'interaction (61 ; 62) est agencée de façon symétrique par rapport au centre de ladite boule (1).

9. Le dispositif d'entrée de données selon l'une des revendications 1 à 8, **caractérisé en ce que** ledit dispositif d'entrée est contenu dans un appareil qui comprend un écran, où un moyen de commande est prévu qui transforme le mouvement de ladite boule (1) mesuré par ledit moyen de détection de rotation (73) en un mouvement d'un repère sur ledit écran.

10. Le dispositif d'entrée de données selon la revendication 9, **caractérisé en ce que** lesdits premier et deuxième moyens d'interaction (51 ; 61 ; 62) sont agencés de sorte que le nombre d'états que ladite boule (1) peut prendre en raison de l'interaction desdits premier et deuxième moyens d'interaction (51 ; 61 ; 62) correspond au nombre d'états que ledit repère peut prendre sur ledit écran.

11. Le dispositif d'entrée de données selon l'une des revendications 1 à 10, **caractérisé en ce que** ledit moyen d'entrée de données est une partie d'une boule de commande.

12. Le dispositif d'entrée de données selon l'une des revendications 1 à 11, **caractérisé en ce que** ledit moyen d'entrée de données est une partie d'un téléphone portatif.
